# EUROPÄISCHE PATENTANMELDUNG

(11) **EP 2 063 213 A2**
(43) Veröffentlichungstag der Anmeldung: **27.05.2009**
(21) Anmeldenummer: 08169810.2
(22) Anmeldetag: 24.11.2008
(51) Int. Cl.: F41H 5/013

(54) **Befestigungsvorrichtung für Mittel zum Verbinden von Einbauteilen in Fahrzeugzellen**

(30) Priorität: 23.11.2007 DE 202007016432 U; 17.09.2008 DE 202008012308 U; 17.09.2008 DE 202008012307 U
(71) Anmelder: AST Security Equipment GmbH, 27419 Sittensen (DE)
(72) Erfinder: Schmidt, Fritz-Gerhard, 21614 Buxtehude (DE); Stabenau, Hans Günter, 27419 Sittense (DE)
(74) Vertreter: Scholz, Hartmut

(57) **Zusammenfassung**

Befestigungsvorrichtung (40) für Mittel zum Verbinden von Einbauteilen an Fahrzeugzellen, insbesondere einer Luftfahrzeugzellen, mit einem Maßabweichungen zu fahrzeugseitigen Aufnahmen (58) überbrückender Adapter (42).

## Beschreibung

Die vorliegende Erfindung betrifft eine Befestigungsvorrichtung für Mittel zum Verbinden von Einbauteilen in Fahrzeugzellen, insbesondere in Luftfahrzeugzellen.

Aus dem Stand der Technik ist eine Vielzahl von Befestigungsvorrichtungen für Innenverkleidungs- und Einbauteile in und an Fahrzeugzellen, insbesondere Luftfahrzeugzellen, bekannt. Aus der DE 101 25 216 C2 ist beispielsweise ein schnell lösbares Befestigungsvorrichtung bekannt, bei dem pilzartige Haltenasen in Hinterschneidungen von mit einem Luftfahrzeug, nämlich einem Flugzeug, fest verbundenen Befestigungsschienen eingesteckt werden.

Derartige Befestigungsvorrichtung haben den Nachteil, dass die Befestigung aus Sicherheitsgründen nur an dafür vorgesehen Aufnahmepunkten in oder an einer Luftfahrzeugzelle vorgenommen werden darf und möglich ist. Eine Anpassung der Aufnahmepunkte ist nicht möglich.

Produktionsbedingt kommt es innerhalb einer Baureihe einer Fahrzeugzelle jedoch immer wieder zu Maßabweichungen, durch die die vorgesehenen Positionen der Aufnahmepunkte schwanken können. Beim Einbau einer solchen Befestigungsvorrichtung ergeben sich dadurch oft nicht erhebliche Probleme, um zu den jeweiligen Aufnahmepunkten zu kommen. Werden trotz dieser Maßabweichungen die Befestigungsvorrichtung in der Fahrzeugzelle installiert, so kann es zu erheblichen Spannungen und Spannungsspitzen kommen.

Ein weiteres Problem sind Schwingungen und Vibrationen, die beim Betrieb eines Fahrzeugs auftreten. Insbesondere bei einem Luftfahrzeug kann es dadurch zu Festigkeitsproblemen kommen. Im ungünstigsten Fall kann dies zu Ermüdungsbrüchen führen, zumal die Schwingungen und Vibrationen der Fahrzeugzelle auf die Einbauteile übertragen werden.

Ein Aus der DE 20 2006 018 705.7 Ul ist ein Befestigungsmittel für Einbauten bekannt, das elastisch mit einem in Luftfahrzeug verbunden werden kann. Diese Befestigungsmittel sind elastisch ausgebildet, um kleine Relativbewegungen zwischen Einbauten und Fahrzeugzellen ausgleichen zu können. Maßabweichungen zwischen den Aufnahmepunkten Einbauten im variablen Einsatz ist damit nicht möglich.

Aufgabe der vorliegenden Erfindung ist es, ein Befestigungsvorrichtung der eingangs beschriebenen Art zu schaffen, mit dem Maßabweichungen zwischen Aufnahmepunkten und Einbauten überbrückt und ein spannungsfreies Anbringen in einer Fahrzeugzelle, insbesondere eine Luftfahrzeugzelle, ermöglicht wird.

Gelöst wird diese Aufgabe durch die in den Ansprüchen 1 und 10 angegebenen Merkmale. Weitere vorteilhafte Ausführungsformen der Erfindung sind Gegenstand der Unteransprüche.

Insbesondere wird diese Aufgabe dadurch gelöst, dass einem Haltemittel zur Verbindung mit einer Fahrzeugzelle ein Maßabweichungen zu fahrzeugseitigen Aufnahmen überbrückender Adapter zugeordnet ist. Zur vorteilhaften Ausführung ist es vorgesehen, ist es vorgesehen, dass der Adapter mit einem elastischen Schwingungsdämpfer versehen ist.

In einer bevorzugten Ausführungsform des erfindungsgemäßen Adapters ist das Haltemittel als im Wesentlichen zylindrisches Verbindungsstück ausgebildet. Hierdurch kann eine von Spannungsspitzen und Stressfeldern möglichst freie Kontaktfläche zu dem Plattenhalter erreicht werden.

In einer weiteren bevorzugten Ausführungsform des erfindungsgemäßen Adapters weist das Verbindungsstück eine in der Längsachse des Adapters verlaufende Gewindebohrung auf, die in einen Konus übergeht.

Gemäß einer weiteren bevorzugten Ausführungsform des erfindungsgemäßen Adapters weist das Verbindungsstück im Bereich des Konus eine entlang der Längsachse des Adapters verlaufende Nut auf.

In einer vorteilhaften Ausführungsform des erfindungsgemäßen Adapters teilt die Nut das Verbindungsstück in mindestens zwei einander gegenüberliegende Spreizbacken.

Gemäß einer weiteren besonders bevorzugten Ausführungsform des erfindungsgemäßen Adapters ist das Verbindungsstück einstückig mit einem zylindrisch ausgebildeten Adapterkopf verbunden.

In einer weiteren besonders bevorzugten Ausführungsform des erfindungsgemäßen Adapters weist der Adapterkopf einen größeren Außendurchmesser als das Verbindungsstück auf, wobei der Adapterkopf zum Verbindungsstück hin eine umlaufende Hinterschneidung aufweist.

Gemäß einer weiteren bevorzugten Ausführungsform des erfindungsgemäßen Adapters weist der Adapterkopf eine Einsenkung auf.

Gemäß einer weiteren besonders bevorzugten Ausführungsform des erfindungsgemäßen Adapters weist die Einsenkung des Adapterkopfes eine in Längsachse des Adapters verlaufende Gewindebohrung auf, die ab dem Verbindungsstück eine Nut ausgebildet.

In einer vorteilhaften Ausführungsform des erfindungsgemäßen Adapters kann das Verbindungsstück in eine vorkonfektionierte Aufnahme eines Plattenhalters eingeführt werden. Hierdurch lässt sich eine Vielzahl von Adaptern auf vorgefertigte Aufnahmen von Plattenhaltern ohne umfangreiche Anpassungsarbeiten während des Einbaus abstimmen.

In einer besonders bevorzugten Ausführungsform des erfindungsgemäßen Adapters ist das Verbindungsstück an einer Innenseite der Aufnahme des Plattenhalters durch Spreizung der Spreizbacken entlang der Nut klemmgehalten. Durch diese Maßnahme kann gewährleistet werden, dass eine Sollspreizstrecke entlang der Nut anliegt. Somit kann gewährleistet werden, dass das Verbindungsstück eine genau definierte Überbrückung zu einem fahrzeugseitigen Aufnahmepunkt ausbildet.

In einer besonders bevorzugten Ausführungsform des erfindungsgemäßen Adapters kann in die Gewindebohrung des Verbindungsstücks ein Gewindebolzen einbeschraubt werden. Dabei drückt der Gewindebolzen gegen ein in dem Konus angeordnetes Spreizmittel, das dadurch in den Konus gepresst wird.

Das Verbindungsstück weitet sich dadurch entlang der Nut auf und die Spreizbacken werden gegen die Innenoberflächen einer Spreizbackenaufnahme des Halters gedrückt. Der Halter ist dazu mit einem Halterkopf versehen, der eine Halterkopfbohrung aufweist, deren Innendurchmesser im Wesentlichen dem Außendurchmesser des Verbindungsstücks entspricht. Hierdurch wird ein Adapter geschaffen, der effektiv und einfach zu handhaben ist und dabei kosteneffizient herzustellen ist.

In einer vorteilhaften Ausführungsform des erfindungsgemäßen Adapters ist das Spreizmittel eine Kugel, die einen Außendurchmesser aufweist, der im Wesentlichen dem Durchmesser in der Gewindebohrung entspricht, aber größer als der Durchmesser der konischen Bohrung ist. Durch Verschieben der Kugel in dem Konus wird die in den Schraubbolzen eingeleitete Kraft auf die Spreizmittel übertragen, die sich gleichmäßig aufweiten.

Bei einer weiteren vorteilhaften Ausführungsform des erfindungsgemäßen Adapters weist der Schraubbolzen an seinem äußeren freien Ende eine Schraubbolzeneinsenkung auf, über die er mittels eines Werkzeuges in Wirkverbindung mit dem Adapterkopf gebracht werden kann. Die Einsenkung des Schraubbolzenkopfes kann beispielsweise mit einem Innensechskant versehen sein. Als Werkzeug wäre in einem solchen Fall ein entsprechender Inbusschlüssel geeignet, der das nötige Drehmoment zum Eindrehen des Schraubbolzens in die Gewindebohrung ermöglicht.

In einer besonders vorteilhaften Ausführungsform des erfindungsgemäßen Adapters ist der Schraubbolzen im eingedrehten Zustand mit einer Kontermutter gesichert, wobei die Kontermutter in eine Einsenkung des Adapterkopfes einlegbar ist. Hierdurch wird ein Herausdrehen des Schraubbolzens aus der Gewindebohrung, beispielsweise durch Vibrationen, wirkungsvoll verhindert,

In einer besonders vorteilhaften Ausführungsform des erfindungsgemäßen Adapters schließt die Kontermutter im den Schraubbolzen sichernden Zustand bündig mit dem Adapterkopf ab. Hierdurch werden unnötige und überflüssige Überstände durch die Kontermutter vermieden, was gleichzeitig der Maßhaltigkeit des gesamten Adapters zugute kommt.

Gemäß einer vorteilhaften Ausführungsform des vorliegenden Adapters ist die Hinterschneidung des Adapterkopfes im festgelegten Zustand des Verbindungsstücks in der Aufnahme kraftschlüssig mit einer Anlagefläche des Plattenhalters verbunden. Hierdurch wird ein wirkungsvoller Kraftschluss zwischen Adapterkopf und Plattenhalter sichergestellt.

Bei einer anderen erfindungsgemäßen Befestigungsvorrichtung ist es vorgesehen, dass der Adapter und das Haltemittel mehrteilig ausgebildet sind. Der Adapter ist gegenüber dem Haltemittel stufenlos verschiebbar, insbesondere längsverschiebbar. Dadurch ist es möglich, mit einem Adapter unterschiedlich große Maßabweichungen stufenlos zu überbrücken.

Bei einer weiteren vorteilhaften Ausführung der Erfindung ist es vorgesehen, dass der Adapter einen dem zu haltenden Einbauteil zugeordneten Grundkörper und einen über das zu haltende Einbauteil hinaus ragenden Adapterzapfen aufweist und der Grundkörper und der Adapterzapfen mit einer Anpressplatte miteinander verbunden werden können.

Bei einer weiteren vorteilhaften Ausführung der Erfindung ist es vorgesehen, dass das zu haltenden Einbauteil mit Gewindehülsen versehen ist und die abgewinkelten Wagenschenkel über mittels in die Gewindehülsen einbringbaren Halteschrauben mit dem Haltemittel verbunden sind.

Dabei besteht das Haltemittel gemäß der Erfindung aus zwei einander gegenüberliegenden, abgewinkelten Wangenschenkeln, die zwischen dem Grundkörper und der Anpressplatte des Adapters gehalten werden. Die abgewinkelten Wangenschenkel des Haltemittels und der Grundkörper des Adapters sind vorteilhaft mit gewichtreduzierenden Bohrungen versehen.

Bei einer anderen vorteilhaften Ausführung der Erfindung ist es vorgesehen, dass der Abstandsabweichungen zu fahrzeugseitigen Aufnahmen überbrückende Adapter mit einem elastischen Schwingungsdämpfer versehen ist. Der Schwingungsdämpfer ist erfindungsgemäß ein O-Ring. Durch diese Maßnahmen werden schädliche Schwingungen und Vibrationen der Fahrzeugzelle von den Einbauteilen, beispielsweise Krankentragen, ferngehalten.

Durch einen erfindungsgemäß gegen Schwingungen gedämpften Adapter können vorkonfektionierte Haltemittel, beispielsweise Plattenhalter für nachträglich einzubauende ballistische Schutzplatten in Hubschraubern, in eine Vielzahl von Luftfahrzeugzellen gleichen Bautyps eingebaut werden, bei denen die Aufnahmepunkte für die Halterungen trotz Baugleichheit unterschiedlich vorhanden sind. Produktionsbedingte Maßabweichungen, beispielsweise hinsichtlich der Abstände zwischen den Kräfte aufnehmenden Holmen und Versteifungsrippen und den vorbestimmten Aufnahmepunkten für einzubauende Halterungen gleich welcher Art, können damit ausgeglichen werden.

Die Halter zum Befestigen von Einbauteilen kann mit einem erfindungsgemäßen Adapter der oben beschriebenen Art verbunden werden, wobei die Aufnahme der Halter über vorkonfektionierte Bohrungen zur Gewichtsreduzierung vorteilhaft erfolgen kann. Hierdurch lassen sich Gewicht und Kosten bei dem zum Einbau in eine Luftfahrzeugzelle bestimmten Halter reduzieren. Erfindungsgemäß ist das Fahrzeug ein Luftfahrzeug, nämlich ein Hubschrauber oder ein Flugzeug.

Die Erfindung wird im Folgenden anhand einer beispielhaften Ausführungsform unter Bezugnahme auf die beigefügte Zeichnung näher erläutert; es zeigt:
- **Figur 1**: die Seitenansicht einer einfachen erfindungsgemäßen Befestigungsvorrichtung, mit einem Adapterzapfen, der einstückig mit einem Verbindungsstück verbunden ist und aufspeizbare Spreizbacken aufweist;
- **Figur 2**: die Seitenansicht eines eingebauten Adapterzapfens nach der Figur 1, mit einem in der Halterkopfbohrung des Halterkopfes eines Halters aufgespeiztem Verbindungsstück für einzubauende ballistische Schutzplatten;
- **Figur 3**: die Seitenansicht eines eingebauten Adapterzapfens nach der Figur 2, der erfindungsgemäß mit einem Schwingungsdämpfer versehen ist;
- **Figur 4**: die Seitenansicht einer erfindungsgemäßen Befestigungsvorrichtung, mit einem gehaltenen Einbauteil in Form einer ballistischen Schutzplatte, mit einem stufenlos längsverschiebbaren und über das zu haltendes Einbauteil hinaus ragenden Adapter und einem dem Adapter zugeordneten Schwingungsdämpfer in Form eines O-Ringes;
- **Figur 5**: die Vorderansicht einer erfindungsgemäßen Befestigungsvorrichtung nach Figur 4, teilweise geschnitten;
- **Figur 6**: die Explosionsdarstellung einer erfindungsgemäßen Befestigungsvorrichtung nach der Figur 4, mit abgewinkelten Wangenschenkeln und einem über die abgewinkelten Wangenschenkel hinaus ragenden Adapter, der relativ zu diesen stufenlos längsverschiebbar ist;
- **Figur 7**: die isometrische Darstellung einer erfindungsgemäßen Befestigungsvorrichtung nach Figur 4, mit abgewinkelten Wangenschenkeln, zwischen denen in Einbauteil in Form einer ballistischen Schutzplatte gehalten ist, und der Adapter erfindungsgemäß über einen Schwingungsdämpfer mit einer Halteraufnahme einem fahrzeugseitigen Träger einer Fahrzeugzelle verbundenen ist.

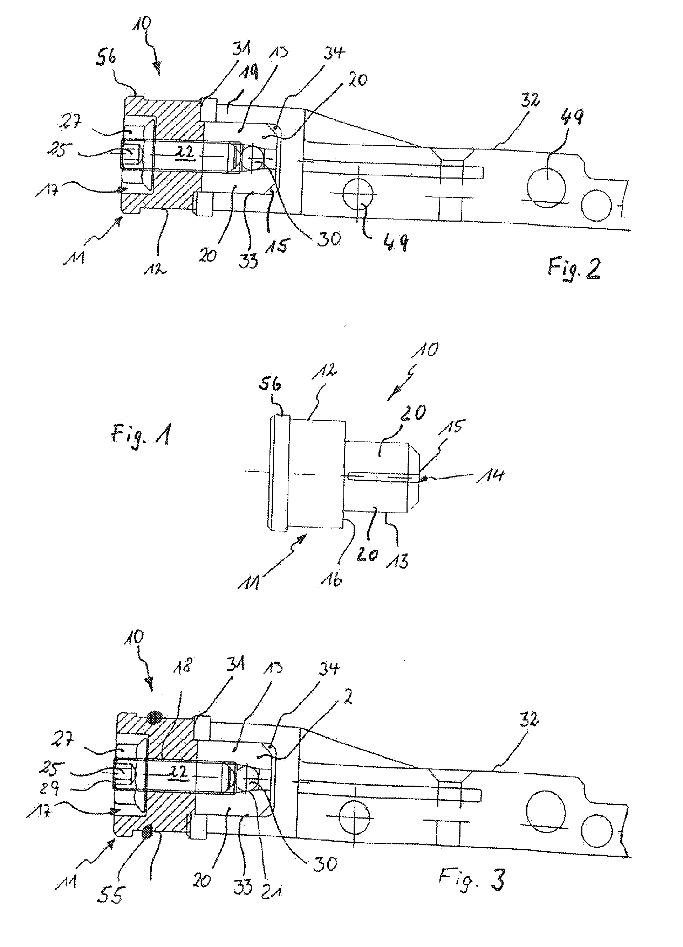

Bei der Befestigungsvorrichtung 10, wie sie die Figur 1 zeigt, ist ein Adapterzapfen 11 vorgesehen. Der Adapterzapfen 11 weist einen Adapterkopf 12 und ein einstückig angeformtes Verbindungsstück 13 auf. Das Verbindungsstück 13 ist mit einer längs verlaufenden Nut 14 versehen.

Die Nut 14 verläuft dabei vom freien Ende des Verbindungsstücks 13 bis unmittelbar zu dem einstückig angeformten Adapterkopf 12. Dabei ist es vorgesehen, dass die Nut 14 das Verbindungsstück 13 in Längsrichtung in Spreizbacken 20 teilt.

Der Adapterkopf 12 weist einen größeren Außendurchmesser als das Verbindungsstück 13 auf. Der Adapterkopf 12 ist mit einer Hinterschneidung 16 versehen, mit der er gegenüber dem Verbindungsstück 13 abgesetzt ist. Axial außen weist der Adapterkopf 12 einen radial außen rundumlaufenden Adapterkragen 56 auf. Der Adapterkragen 56 weist einen größeren Außendurchmesser als der Adapterzapfen 11 auf.

Wie die Figur 2 zeigt, ist der Adapterkopf 12 mit einer zentrischen Einsenkung 17 versehen. Die Einsenkung 17 weist ungefähr den gleichen Außendurchmesser wie das Verbindungsstück 13 auf. Das Verbindungsstück 13 ist in einer Halterkopfbohrung 15 eines Halterkopfes 19 eines Halters 32 für hier nicht dargestellte ballistischen Schutzplatten festgelegt.

In der Einsenkung 17 des Adapterkopfes 12 ist in Längsrichtung des Adapterzapfens 11 eine Gewindebohrung 18 vorgesehen. Die Gewindebohrung 18 ist dem Adapterkopf 12 zugeordnet und in dieser Ausführungsform im Wesentlichen auf diesen beschränkt.

Die Gewindebohrung 18 geht in einen Konus 21 über, der sich in Längsrichtung des Adapterzapfens 11 im Bereich des Verbindungsstücks 13 befindet und sich bis zu dessen Ende erstreckt. Das Verbindungsstück 13 wird im Bereich des Konus 21 durch die Nut 14 geteilt und bildet Spreizbacken 20 aus. Dabei verjüngt sich der Konus 21 weiter und ist Ende des Adapterzapfens 11 offen.

In die Gewindebohrung 18 kann ein Schraubbolzen 22 eingeschraubt werden. Hierfür weist der Schraubbolzen 22 eine Schraubbolzeneinsenkung 25 auf. Die Schraubbolzeneinsenkung 25 ist als Innensechskant ausgebildet, so dass der Schraubbolzen 22 beispielsweise mit einem Imbusschlüssel in die Gewindebohrung 18 eingeschraubt werden kann. Der Schraubbolzen 22 kann in der Einsenkung 17 des Adapterkopfes 12 mit einer Kontermutter 27 festgelegt werden.

In einer anderen Ausführungsform kann die Schraubbolzeneinsenkung 25 auch für Pozidriv-, Torx- oder Kreuzschlitzwerkzeuge geeignet ausgebildet sein. Allerdings sind hierfür auch jede andere Mitnahmeprofile denkbar.

Der Schraubbolzen 22 kann durch Eindrehen in die Gewindebohrung 18 des Adapterkopfes 12 mit einem Spreizmittel 30 in Wirkverbindung gebracht werden. Das Spreizmittel 30 ist in dieser Ausführungsform als Kugel ausgebildet. Durch das Eindrehen des Gewindebolzens 22 wird das Spreizmittel 30 in den Konus 21 gepresst. Dabei weitet sich der Außenumfang des Verbindungsstücks 13 im Bereich der Spreizbacken 20 auf, wobei die Nut 14 als Sollkennlinie dient. Dadurch kommen die Spreizbacken 20 des Verbindungsstücks 13 in der Halterkopfbohrung 15 des Halterkopfes 19 des Halters 32 zur Anlage.

Durch dieses Spreizen der Spreizbacken 20 des Verbindungsstücks 13 wird eine kraftschlüssige Verbindung zwischen der Innenoberfläche 33 und einer Spreizbackenaufnahme 34 des Halters 32 geschaffen. Der Spreizvorgang ist reversibel und das Verbindungsstück 13 kann bei Bedarf schnell und unkompliziert wieder entfernt werden.

In dieser Stellung kann der Schraubbolzen 22 mit der Kontermutter 27 in der Einsenkung 17 gekontert und damit festgelegt werden. Die Kontermutter 27 schließt dabei bündig mit der Einsenkung 17 ab und die Hinterschneidung 16 des Adapterkopfes 12 liegt kraftschlüssig an der Anlagefläche 31 eines Halters 32, beispielsweise für eine nicht dargestellte ballistische Schutzplatte, an.

Als Spreizbackenaufnahme 34 dient eine ohnehin vorhandene Halterkopfbohrung, die zur Gewichtsreduzierung des Halters 32 angelegt ist. Sie weißt eine gewisse Tiefe auf, um das Verbindungsstück 13 ortslageverschiebbar einlegen zu können.

Somit lassen sich Maßabweichungen zwischen den Aufnahmepunkten für Halter 32 aller Art zur Verbindung mit einer Luftfahrzeugzelle ausgleichen. Dabei handelt es sich in dieser Ausführungsform um Luftfahrzeugzellen gleichen Bautyps.

Es ist vorgesehen, dass der Adapterzapfen 11 einen Längenausgleich innerhalb der Aufnahme von bis zu 20mm ermöglicht. Dies entspricht im Wesentlichen den Maßabweichungen, die sich durch die unterschiedlichen Baureihen ergeben und für die ein Ausgleich zulässig ist.

Bei der in der Figur 3 dargestellten Ausführung ist der Adapterkopf 12 des Adapterzapfens 11 mit einer rundumlaufenden, Nut 54 versehen. Die Nut 54 befindet sich dabei im Bereich des Adapterkragens 56 und dient der Aufnahme eines Schwingungsdämpfers 55. Der Schwingungsdämpfer55 besteht aus einem Schwingungen dämpfenden Elastomer und ist beispielsweise als O-Ring ausgebildet.

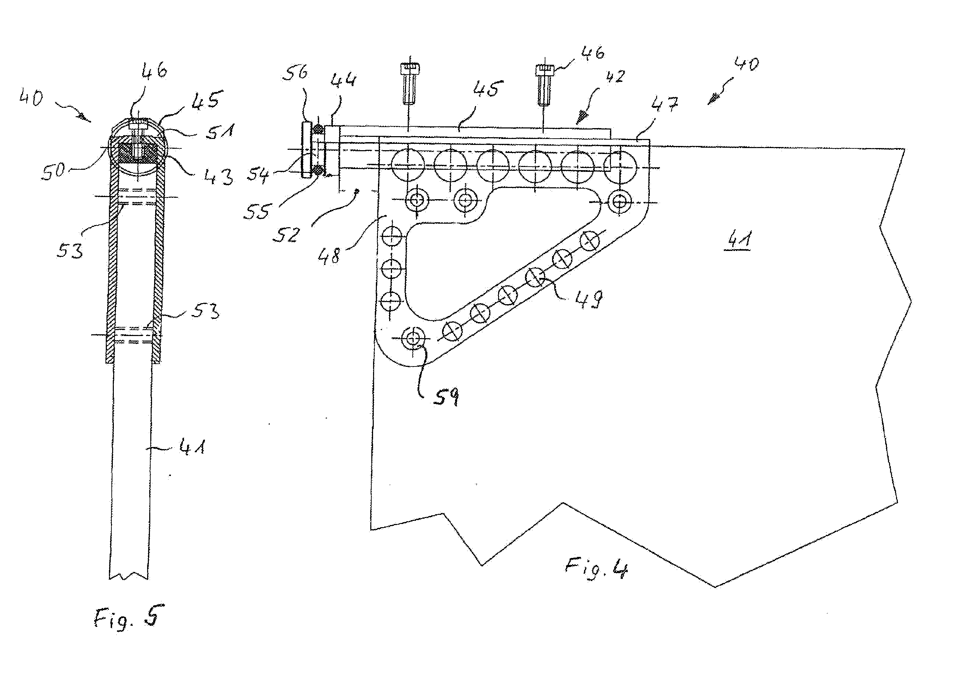

Die in den Figuren 4 und 5 dargestellten weitere Ausführung einer erfindungsgemäßen Befestigungsvorrichtung 40 dient der Verbindung eines Einbauteils 41 mit einer nicht näher dargestellten Fahrzeugzelle, beispielsweise eines Luftfahrzeugs, insbesondere eines Hubschraubers.

Die Befestigungsvorrichtung 40 weist dazu einen Adapter 42 auf, der im Wesentlichen aus einem quaderförmigen Grundkörper 43 mit einem einstückig angeformten Adapterzapfen 44 besteht. Mit dem quaderförmigen Grundkörper 43 kann eine Anpressplatte 45 in Wirkverbindung gebracht werden. Die Anpressplatte 45 kann beispielsweise mit Feststellschrauben 46 lösbar mit dem Grundkörper 43 verbunden und durch selbstsichernde Helicoils gesichert werden.

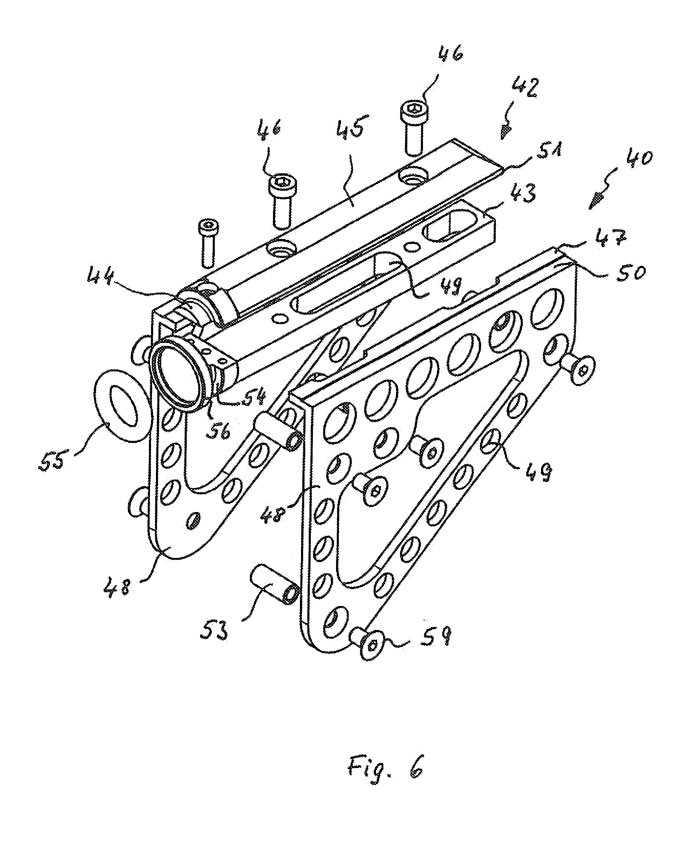

Wie die Figur 6 zeigt, sind dem quaderförmigen Grundkörper 43 von einem Haltemittel 48 rechtwinklige abgewinkelte Wagenschenkel 47 zugeordnet. Das Haltemittel 48 ist paarweise ausgebildet und kann das zu haltende Einbauteil 41 zwischen sich einschließen.

Zur Gewichtsersparnis sind die abgewinkelten Wagenschenkel 47 mit gewichtreduzierenden Bohrungen 49 versehen; ebensolche gewichtreduzierende Bohrungen 49 können in dem quaderförmigen Grundkörper 43 vorgesehen sein. Durch die gewichtreduzierenden Bohrungen 49 wird die Festigkeit und Lastaufnahmefähigkeit weder des quaderförmigen Grundkörpers 43 noch der abgewinkelten Wagenschenkel 47 des Haltemittels 48 beeinträchtigt.

Die abgewinkelten Wagenschenkel 47 des Haltemittels 48 sind seitlich außen mit längsverlaufenden Ausfräsungen 50 versehen, und die Anpressplatte 45 ist seitlich außen mit einstückig ausgeformten Führungen 51 versehen. Die Anpressplatte 45 ist mit den einstückig ausgeformten Führungen 51 in den längsverlaufenden Ausfräsungen 50 relativ zu den abgewinkelten Wagenschenkel 47 des Haltemittels 48 längsverschiebbar. Wie die Figur 4 zeigt, kann der Adapterzapfen 44 durch diese relative Verschiebbarkeit einen über das Einbauteil 41 hinaus ragenden Einstellbereich 52 stufenlosen überbrücken.

Das Haltemittel 48 ist mit Wangenbefestigungen in Form von Gewindehülsen 53 mit dem zu haltenden Einbauteil 41 verbunden, vorzugsweise mit Halteschrauben 59 verschraubt. Das Einbauteil 41 ist dazu mit Gewindehülsen 53 versehen. Die Gewindehülsen 53 sind vorzugsweise durchgehend ausgebildet.

Wie die Figur 5 zeigt, ist der über das Einbauteil 41 hinaus ragende einstückig an den quaderförmigen Grundkörper 43 angeformte Adapterzapfen 44 vorzugsweise kreisrund ausgebildet und, wie die Figur 4 zeigt, mit einer rundumlaufenden Nut 54 versehen.

In die rundumlaufende Nut 54 ist ein O-Ring als erfindungsgemäßer Schwingungsdämpfer 55 eingelegt. Axial außen zu der Nut 54 ist der Adapterzapfen 44 mit einem rundumlaufenden Adapterkragen 56 versehen. Der Adapterkragen 56 weist einen größeren Außendurchmesser als der Adapterzapfen 44 auf.

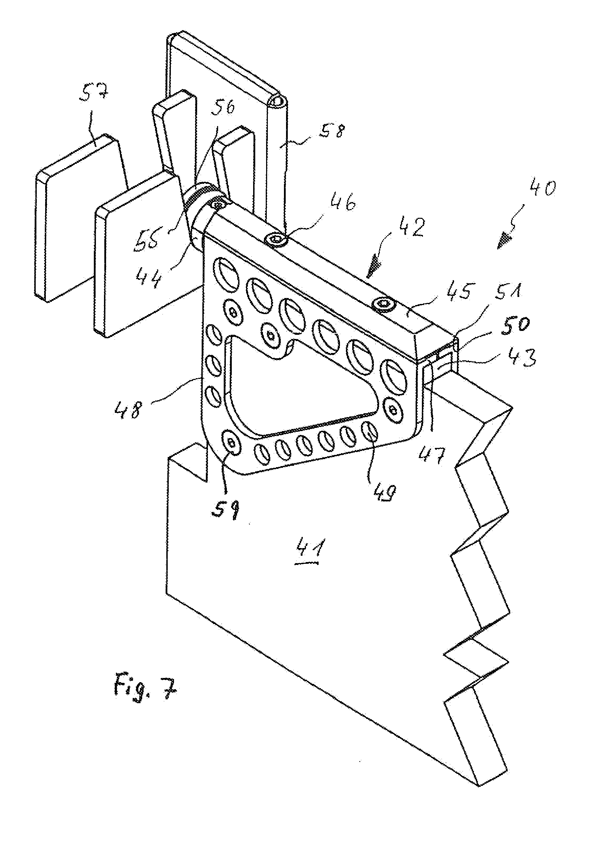

Wie die Figur 7 zeigt, kann der die Haltemittel 48 eines Einbauteils 41 tragende quaderförmige Grundkörper 43 des Adapters 42 mit seinem einstückig angeformten Adapterzapfen 44 in Zapfenaufnahmen 57 eines fahrzeugseitigen Trägers 58 eingehängt werden. Dabei greift der Adapterkragen 56 hinter die Zapfenaufnahme 57 und ist somit hier festgelegt. Der dargestellte fahrzeugseitige Träger 58 ist mit einer nicht dargestellten Fahrzeugzelle, beispielsweise eines Hubschraubers, verbunden.

Die Zapfenaufnahmen 57 des Trägers 58 ist eine in Einbaulage oben offen. In die oben offenen Zapfenaufnahmen 57 können Einbauteile 41, beispielsweise ballistische Schutzplatten, vor einem zu erwartenden, die Besatzung gefährdenden behördlichen Einsatz, mit den Adapterzapfen 44 ihrer Haltemittel eingehängt werden. Ebenso können beispielsweise Krankentragen vibrationsfrei in einer Luftfahrzeugzelle eingehängt werden und so einen schonenden Verwundetentransport gewährleisten.

Durch die erfindungsgemäßen Schwingungsdämpfer 55 werden Schwingungen und Vibrationen der nicht dargestellten Fahrzeugzelle von den Einbauteile 41 ferngehalten. Durch Schwingungen und Vibrationen bedingte Beschädigungen der Einbauteile 41 oder sonstige Beeinträchtigungen, beispielsweise der Flugeigenschaften, können so wirksam werden.

Nach einem solchen Einsatz können die Einbauteile 41 leicht und einfach wieder entfernt werden. Das Fahrzeug kann dann für einen anderen, eine höhere Zuladung erfordernden, ungefährlicheren Einsatz bereitgestellt werden. Die Bandbreite der Einsatzmöglichkeiten von in nicht unbegrenzter Anzahl zur Verfügung stehenden Fahrzeugen, insbesondere von Hubschraubern, kann so mit relativ einfachen Mitteln wesentlich erhöht werden.

### Bezugszeichen

- 10: Befestigungsvorrichtung
- 11: Adapterzapfen
- 12: Adapterkopf
- 13: Verbindungsstück
- 14: Nut
- 15: Halterkopfbohrung
- 16: Hinterschneidung
- 17: Einsenkung
- 18: Gewindebohrung
- 19: Halterkopf
- 20: Spreizbacke
- 21: Konus
- 22: Schraubbolzen
- 25: Schraubbolzeneinsenkung
- 27: Kontermutter
- 30: Spreizmittel
- 31: Anlagefläche
- 32: Halter
- 33: Innenoberfläche
- 34: Spreizbackenaufnahme
- 40: Befestigungsvorrichtung
- 41: Einbauteil
- 42: Adapter
- 43: quaderförmiger Grundkörper
- 44: Adapterzapfen
- 45: Anpressplatte
- 46: Feststellschraube
- 47: abgewinkelte Wagenschenkel
- 48: Haltemittel
- 49: gewichtreduzierende Bohrung
- 50: längsverlaufende Ausfräsung
- 51: einstückig angeformte Führung
- 52: Einstellbereich
- 53: Gewindehülse
- 54: rundumlaufende Nut
- 55: Schwingungsdämpfer
- 56: Adapterkragen
- 57: Zapfenaufnahme
- 58: fahrzeugseitiger Träger
- 59: Halteschraube

## Patentansprüche

1. Befestigungsvorrichtung für Mittel zum Verbinden von Einbauteilen an Fahrzeugzellen, insbesondere in Luftfahrzeugzellen, **dadurch gekennzeichnet, dass** einem Haltemittel (13, 48) zum Verbinden von Einbauteilen (41) mit einer Fahrzeugzelle ein Maßabweichungen zu fahrzeugseitigen Aufnahmen (58) überbrückender Adapter (11, 42) zugeordnet ist.

2. Befestigungsvorrichtung nach Anspruch 1, **dadurch gekennzeichnet, dass** das Mittel (13, 48) zum Verbinden von Einbauteilen (41) mit einer Fahrzeugzelle mehrteilig ausgebildet und dieser gegenüber verschiebbar ist.

3. Befestigungsvorrichtung nach den Ansprüchen 1 und 2, **gekennzeichnet durch** einen Adapterzapfen (11) der einstückig mit einem im Wesentlichen zylindrisch ausgebildeten Verbindungsstück (13) versehen ist, das Verbindungsstück (13) eine längsverlaufenden mittigen Gewindebohrung (18) aufweist, in die ein Schraubbolzen (22) einschraubbar ist, die Gewindebohrung (18) in einen Konus (21) übergeht, und das Verbindungsstück (13) im Bereich des Konus (21) entlang einer längsverlaufenden Nut (14) in Spreizbacken (20) geteilt ist.

4. Befestigungsvorrichtung nach einem der vorangehenden Ansprüche, **dadurch gekennzeichnet, dass** das Verbindungsstück (13) einstückig mit einem zylindrisch ausgebildeten Adapterkopf (12) verbunden ist, der einen größeren Außendurchmesser als das Verbindungsstück (13) aufweist, wobei der Adapterkopf (12) gegenüber dem Verbindungsstück (13) eine rundumlaufende Hinterschneidung (16) aufweist.

5. Befestigungsvorrichtung nach einem der vorangehenden Ansprüche, **dadurch gekennzeichnet, dass** der Adapterkopf (12) eine Einsenkung (17) aufweist, die in eine Gewindebohrung (18) übergeht, wobei die Gewindebohrung (18) bis in den Bereich des durch die Nut (14) in Spreizbacken (20) geteilte Verbindungsstücks (13) reicht.

6. Befestigungsvorrichtung nach einem der vorangehenden Ansprüche, **dadurch gekennzeichnet, dass** das Verbindungsstück (13) durch Spreizung der Spreizbacken (20) an der Innenseite (33) einer Spreizbackenaufnahme (34) eines Halters (32) für Einbauteile (41) klemmgehalten ist.

7. Befestigungsvorrichtung nach einem der vorangehenden Ansprüche, **dadurch gekennzeichnet, dass** der Schraubbolzen (22) durch Eindrehen in die Gewindebohrung (18) des Adapterkopfes (12) so auf ein im Konus (21) angeordnetes Spreizmittel (30) wirkt, dass sich der Konus (21) entlang der Nut (14) aufweitet und die Spreizbacken (20) gegen die Innenoberfläche (33) der Spreizbackenaufnahme (34) des Halters (32) drückt.

8. Befestigungsvorrichtung nach Anspruch 7, **dadurch gekennzeichnet, dass** das Spreizmittel (30) eine Kugel ist, die einen Außendurchmesser aufweist, der im wesentlichen dem Durchmesser der Gewindebohrung (18) und dem großen Durchmesser des Konus (21) entspricht.

9. Befestigungsvorrichtung nach einem der vorangehenden Ansprüche, **dadurch gekennzeichnet, dass** der Adapterkopf (12) eine rundumlaufende Nut (54) aufweist, in die ein Schwingungsdämpfer (55) eingelegt ist.

10. Befestigungsvorrichtung nach den Ansprüchen 1 und 2, **dadurch gekennzeichnet, dass** der Adapter (42) einen dem zu haltenden Einbauteil (41) zugeordneter Grundkörper (43) und einen über das zu haltende Einbauteil (41) hinaus ragenden Adapterzapfen (44) aufweisen und der Grundkörper (43) und der Adapterzapfen (44) mit einer Anpressplatte (45) miteinander verbunden sind.

11. Befestigungsvorrichtung nach einem der vorangehenden Ansprüche, **dadurch gekennzeichnet, dass** das Mittel (48) zum Verbinden von Einbauteilen (41) mit einer Fahrzeugzelle abgewinkelte Wangenschenkel (47) aufweist und die Wangenschenkel (47) mit dem zu haltenden Einbauteil (41) verbindbar sind.

12. Befestigungsvorrichtung nach einem der vorangehenden Ansprüche, **dadurch gekennzeichnet, dass** die abgewinkelten Wangenschenkel (47) des Haltemittels (48) seitliche Ausfräsungen (50) und die Anpressplatte (45) mit diesen korrespondierende, längsverlaufende Führungen (51) aufweisen und die Anpressplatte (45) in den Führungen (51) relativ zu den abgewinkelten Wangenschenkeln (47) stufenlos längsverschiebbar geführt ist.

13. Befestigungsvorrichtung nach einem der vorangehenden Ansprüche, **dadurch gekennzeichnet, dass** das zu haltenden Einbauteil (41) mit Gewindehülse (54) versehen ist und die abgewinkelten Wagenschenkel (47) mittels in die Gewindehülsen (54) einbringbare Halteschrauben (59) mit dem Haltemittel (48) verbindbar sind.

14. Befestigungsvorrichtung nach einem der vorangehenden Ansprüche, **dadurch gekennzeichnet, dass** die abgewinkelten Wangenschenkel (47) des Haltemittels (48) zwischen dem Grundkörper (43) und der Anpressplatte (44) des Adapters (42) klemmgehalten sind.

15. Befestigungsvorrichtung nach einem oder mehreren der vorhergehenden Ansprüche, **dadurch gekennzeichnet, dass** der ein Einbauteil (41) mit einer Fahrzeugzelle verbindende Adapter (11, 42) mit einem elastischen Schwingungsdämpfer (55) in Form eines O-Rings versehen ist.
